# EUROPÄISCHE PATENTANMELDUNG

(11) **EP 0 638 402 A1**
(43) Veröffentlichungstag der Anmeldung: **15.02.1995**
(21) Anmeldenummer: 94109433.6
(22) Anmeldetag: 17.06.1994
(51) Int. Cl.: B28C 7/16, B65G 53/46

(54) **Dosiereinrichtung für Feststoffe**

(30) Priorität: 09.08.1993 CH 2441/93
(71) Anmelder: Sika AG, vorm. Kaspar Winkler & Co., CH-8048 Zürich (CH)
(72) Erfinder: Bürge, Theodor A., CH-8954 Geroldswil (CH); Mai, Dieter, CH-8865 Bilten (CH)
(74) Vertreter: Blum, Rudolf Emil Ernst

(57) **Zusammenfassung**

Die vorliegende Erfindung betrifft eine Dosiereinrichtung zum pneumatischen Dosieren von Feststoffen nach dem Rotorprinzip, wobei eine spezielle Rotorabdichtung (8,10) zum Einsatz gelangt.

## Beschreibung

Im modernen Tunnel- und Stollenbau werden an den Spritzbeton hohe Anforderungen hinsichtlich Erstarrungsbeschleunigung und Frühfestigkeit für die Vortriebssicherung und hinsichtlich der Endfestigkeit für die Vorauskleidung (Neue Oesterreichische Tunnelbauweise) sowie für die Endausbetonierung gestellt.

Die hohe und gleichmässige Qualität eines Spritzbetons erfordert eine spezielle Zementqualität und eine genaue Abstimmung des Erstartungsbeschleunigers, anderer Zusatzmittel und Zusatzstoffe sowie die Verwendung geeigneter Zuschläge. Nur bei Einhaltung einer optimalen Zusammensetzung dieser Komponenten können die gestellten Anforderungen erfüllt werden.

Immer anspruchsvollere Projekte im Tunnel- und Tiefbau in schwierigen geologischen Verhältnissen und mit Vortriebsmethoden von hohem Mechanisierungsgrad erfordern zusehends mehr unterstützende Spezialbaumassnahmen.

Die heute bekannten Verfahren für diese Baumethode sind das Trocken- und das Nassspritzverfahren. Das Trockenspritzverfahren arbeitet nach dem Dünnstromprinzip, das Nassspritzverfahren nach dem Dünn- oder Dichtstromverfahren.

Für beide Verfahren sind Abbindebeschleuniger sowohl in flüssiger Form wie in Pulverform im Einsatz. Gerade im Hinblick auf die Konstruktion von einschaligen Tunnelröhren, für das Herstellen von wasserundurchlässigem, hochfestem oder für frost/tausalzbeständigem Spritzbeton sind die Anforderungen an den Spritzbeton ständig gestiegen.

Chemische Zusatzmittel als Erstarrungsbeschleuniger werden schon seit Jahrzehnten verwendet. Dies heisst allerdings nicht, dass jeder Spritzbeton solche Zusatzmittel enthalten muss. Viele Anwendungen wären jedoch ohne Erstarrungsbeschleuniger nicht durchführbar, wie beispeilsweise Abdichtungsarbeiten, Instandsetzungen, Aufbringen von rasch tragfähigen Betonschichten, Sicherungen im Bergbau u.v.a.m.

Der Vollständigkeit halber müssen auch die Zusatzstoffe, welche eine mehr oder weniger grosse Beschleunigerwirkung aufweisen, erwähnt werden. Am bekanntesten ist wohl die Verwendung von Silicafume in kompaktierter, nicht kompaktierter oder in Slurry-Form. Anstelle von Silicafume kann auch synthetisch hergestellte amorphe Kieselsäure verwendet werden. Kombinationen von Silicafume mit Verflüssigern, Hochleistungsverflüssigern, Verzögerern oder Beschleunigern lösen manche Bauprobleme.

Flüssige Zusatzmittel bieten grosse Vorteile, da sie mit dem Anmachwasser dem Spritzgemisch erst an der Düse zugegeben werden. Sie kommen also erst zur Reaktion, wenn man sie braucht. Aufgrund der homogenen Verteilung kann mit kleineren Dosierungen gearbeitet werden, entsprechend geringer ist der Festigkeitsverlust. Die Dosierung der flüssigen Zusatzmittel erfolgt am besten über verstellbare Dosierpumpen. Drucktanks sind weniger geeignet.

Besondere Probleme bestehen nur in der Dosierung pulverförmiger Zusatzmittel und Zusatzstoffe.

Um mit der kleinstmöglichen Dosierung arbeiten zu können, solltendiese im Gemisch homogen verteilt sein. Eine konstante und gleichmässige Dosierung von pulverförmigen Beschleunigern ist schwierig. Bei einer Vormischung des Beschleunigers mit dem Zement/Sand-Gemisch, welches immer einen Anteil Feuchtigkeit aufweist, findet eine Vorhydratation mit dem Zement statt, und ein Teil der Wirkung geht dadurch verloren.

Die aktuelle Dosiertechnik für pulverförmige Zusatzmittel und Zusatzstoffe besteht darin:
a) Zugabe von Hand
b) mechanische Dosierung mittels: Dosierschnecke, Vibrationsdosierer, Pneum.Förderrinne, Banddosierer, Zellenradschleuse, Kammerdosierer, Drehtellerdosierer, Dosierschieber, Kolbendosierer.
c) über einen oder zwei Druckkessel

Die Mehrzahl dieser Verfahren arbeitet diskontinuierlich und nicht synchron zum Ausstoss an Spritzmörtel oder -beton der Fördermaschine. Sie sind sehr kompliziert zu steuern und zu regeln, störungsanfällig und in der Regel auch sehr kostenintensiv und daher unwirtschaftlich.

Der vorliegenden Erfindung liegt die Aufgabe zu Grunde eine kontinuierlich arbeitende, synchron zur Fördermenge der Spritzmaschine, stufenlos regelbare, robuste und wirtschaftliche Dosiereinrichtung für Zusatzmittel und Zusatzstoffe für alle Spritzmörtel und -betonverfahren zu entwickeln.

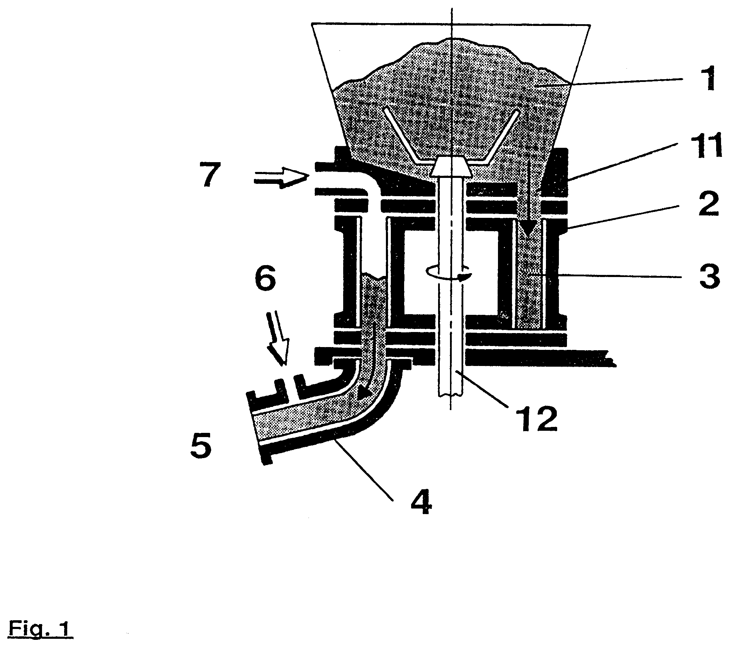

Die Aufgabe konnte gelöst werden durch den Einsatz einer Fördermaschine, welche nach dem bewährten Rotorprinzip arbeitet, welches vom Spritzbeton her bekannt ist. Figur 1 beschreibt das Rotorprinzip. Das Fördergut gelangt über die Einfüllöffnung 11, gewöhnlich mit einem Einfülltrichter 1 bestückt, in die Rotorkammer 3. Der drehende Rotor 2 transportiert das Material zur Abblaskammer 4 aus der das Spritz- oder Fördergut - im freien Fall, unterstützt durch die Oberluft 7 - in den Förderstrom 5 gelangt. In einer Schlauch- oder Rohrleitung wird das Material - mittels Förderluft 6 - zur Düse transportiert.

Um die homogene Verteilung insbesondere der pulverförmigen Zusatzmittel und Zusatzstoffe im Spritzgut zu gewährleisten, müssen diese dem Material- und/oder dem Luftstrom zudosiert werden. Da dies gegen Ueberdruck geschieht, ergeben sich Probleme bei der Abdichtung der Dosiereinrichtung. Diese Probleme werden durch die erfindungsgemässe Dosiereinrichtung gelöst.

Bei der erfindungsgemässen Dosiereinrichtung, die insbesondere für Feststoffe geeignet ist, erfolgt die Dosierung pneumatisch mittels eines Rotors. Um eine Dosierung gegen Ueberdruck zu ermöglichen wird der Rotor 2, gegen die feststehenden Gleitpartner 8,10, abgedichtet.

Diese Abdichtung kann durch Verwendung eines eingeschliffenen Rotors 2, der oben und unten von eingeschliffenen Dichtungsplatten 8,10 abgedichtet wird, erfolgen. Bevorzugt ist mindestens eines der eingeschliffenen Teile, beispielsweise die Dichtungsplatten 8,10, oberflächengehärtet.

Zur besseren Druckkontrolle wird in einer speziell bevorzugten Ausführungsart der Rotor 2 in ein druckdichtes Gehäuse 9 eingekapselt.

Der Rotorantrieb 12 kann entweder beidseitig über den gegebenenfalls speziell abgedichteten Rotorbereich herausragen, wobei einfüllseitig eine Mischvorrichtung für das einzufüllende, zu dosierende Gut vorgesehen werden kann. Abdichtungstechnisch bevorzugt ist jedoch ein nur antriebsseitig aus dem abgedichteten Rotorbereich heraustretender Rotorantrieb 12.

Eine solche Dosiervorrichtung, die speziell auch für Feststoffe geeignet ist, enthält einen Rotor 2, eine Dichtungsplatte 10, die mit mindestens einer Einfüllöffnung 11 versehen ist, die in direkter Verbindung mit mindestens einer Rotorkammer 3 steht. Die mindestens eine Rotorkammer 3 ist versetzt zur Einfüllöffnung 11 mit einer Abblaskammer 4 sowie einer Zuführung für Oberluft 7 verbunden, wobei die Zuführung für Oberluft 7 und die Abblaskammer 4 auf einander gegenüberliegenden Seiten der Rotorkammer 3 angeordnet sind. Damit die Dosierung gegen Ueberdruck erfolgen kann, ist der Rotor 2 gegen die feststehenden Gleitpartner 8,10 abgedichtet. Um einen guten Transport des Förderstroms 5 zu gewährleisten ist in der Abblaskammer 4 eine Zuleitung für Förderluft 6 vorgesehen.

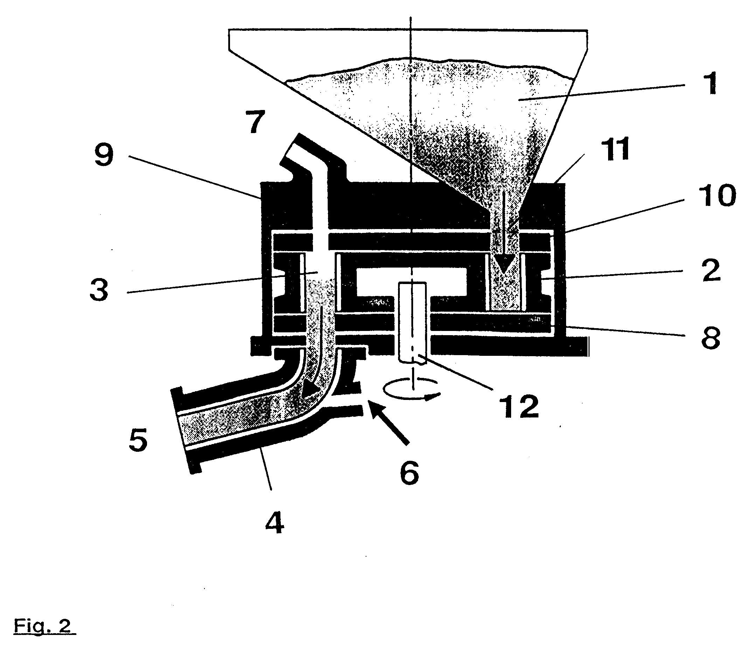

Eine bevorzugte Ausführungsform der erfindungsgemässen Dosiereinrichtung ist in Figur 2 dargestellt. Diese zeigt die Problemlösung durch Einkapselung des Rotors 2 in ein druckdichtes Gehäuse 9 sowie durch die Verwendung eines eingeschliffenen Rotors 2, der von oberflächengehärteten und eingeschliffenen Dichtungsplatten 8,10 unten und oben abgedichtet wird.

Die Dosiereinrichtung kann zwischen den festen Gleitpartnern mehrere Einfüllöffnungen 11 verschiedener Dimensionen aufweisen, so dass die Dosierung nicht nur über die Drehgeschwindigkeit sondern auch über das jeweilige Einfüll- resp. Ausstossvolumen gesteuert werden kann.

Die festen Gleitpartner, insbesondere Dichtungsplatten, sind vorzugsweise aus Metall oder keramischen Sonderwerkstoffen. Denkbar ist auch die Verwendung von verstärkten Kunststoffen. Dadurch, dass nur jeweils eine Kammer gegenüber die unter Druck stehender Förderleitung geöffnet und der Dosierbereich ansonsten gegen Druck abgedichtet ist, wird es möglich Feststoffe pneumatisch in eine Förderleitung mit Betriebsdrücken bis über 10 bar zu dosieren, oft sogar bis über 100 bar. Beim Pumpbeton beispielsweise werden an der Pumpe Drücke bis 300 bar gemessen.

Insbesonders geeignet ist die Dosiereinrichtung für die Zudosierung pulverförmiger Zusatzmittel und Zusatzstoffe zu beispielsweise zementhaltigen Baustoffen. Solche Zusatzmittel und Zusatzstoffe sind u.a. Abbindebeschleuniger, Silicafume und/oder amorphe Kieselsäure.

Die Vorrichtung ist insbesonders auch für die Zudosierung geringer Mengen geeignet, vorzugsweise für Mengen bis zu 10% bezogen auf das Bindemittel.

Die erfindungsgemässe Dosiereinrichtung kann als eigenständiges Gerät betrieben oder als zusätzliches Aggregat an eine Fördermaschine angebaut werden. Die syrichrone Steuerung der Dosiereinrichtung mit der Fördermaschine kann sowohl mechanisch wie auch elektrisch erfolgen.

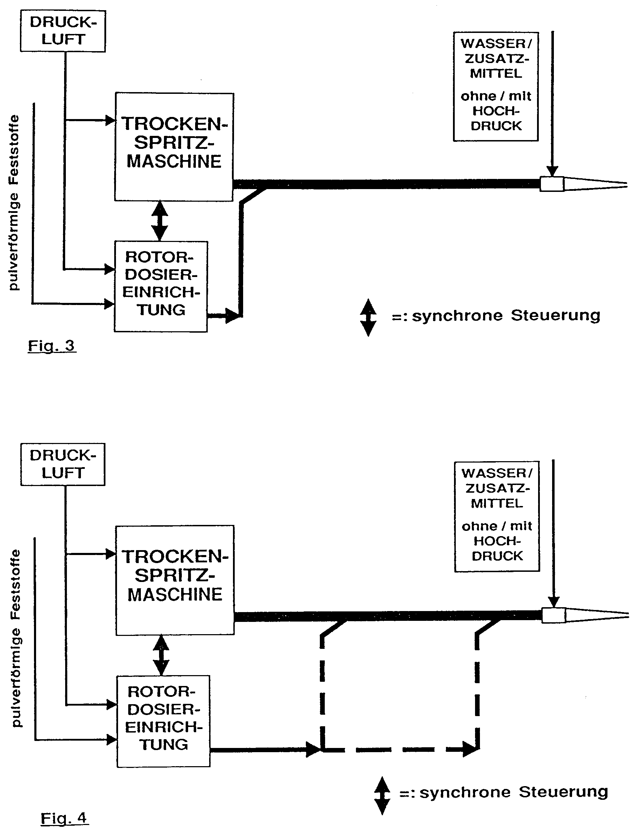

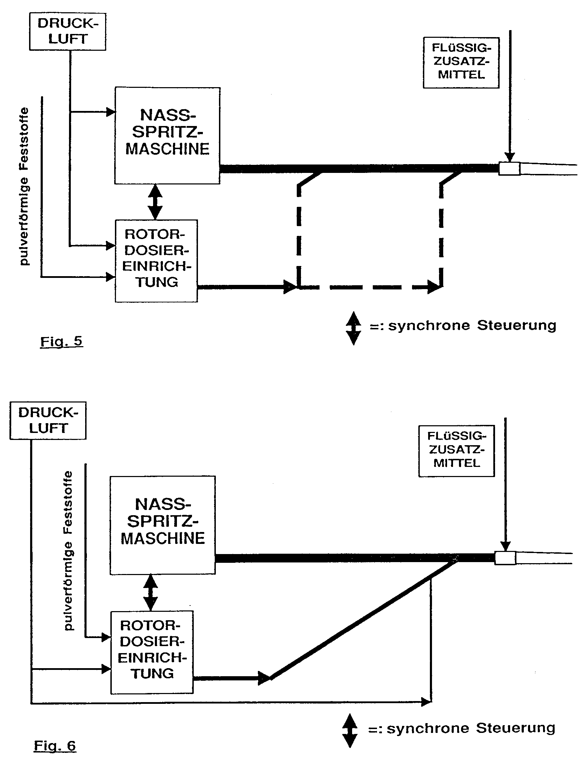

Figuren 3 bis 6 zeigen die üblichen Einsatzanordnungen für das Trocken- und Nassspritzverfahren.
Figur 3 zeigt Pulverdosierung direkt am Förderstromausgang (Trockenspritzverfahren),
Figur 4 Pulverdosierung in Förderstrom an beliebiger Stelle (Trockenspritzverfahren),
Figur 5 Pulverdosierung in Förderstrom an beliebiger Stelle (Nassspritzverfahren - Dünnstrom), und
Figur 6 Pulverdosierung in Förderluftstrom (Nassspritzverfahren - Dichtstrom).

Die Zusammenführung des Zusatzmittel- resp. Zusatzstoffstromes zum Luft- resp. Förderstrom wird mittels Y-förmiger Uebergangsstücke erreicht. Spezielle kostenaufwendige Injektionsdüsen sind nicht erforderlich.

Die erfindungsgemässe Dosiereinrichtung kann auch zur Dosierung insbesondere von pulverförmigen Feststoffen in anderen Anwendungsgebieten bei der Herstellung von Gemengen verwendet werden, z.B. bei der Herstellung von Pumpbeton, von Trockenmörteln, Waschmitteln, chemischen Produkten, etc.

## Patentansprüche

1. Dosiereinrichtung insbesondere für Feststoffe, dadurch gekennzeichnet, dass die Dosierung pneumatisch mittels eines eingeschliffenen Rotors (2), mit mindestens einer Rotorkammer (3) erfolgt, wobei der Rotor (2) mit oberflächengehärteten und eingeschliffenen Gleitpartnern, insbesonders Dichtungsplatten (8, 10), oben und unten abgedichtet ist.

2. Dosiereinrichtung gemäss Anspruch 1, dadurch gekennzeichnet, dass der Rotor (2) eingekapselt ist.

3. Dosiereinrichtung gemäss Anspruch 1 oder 2, dadurch gekennzeichnet, dass die feststehenden Gleitpartner, insbesondere Dichtungsplatten, aus Metall, aus keramischen Sonderwerkstoffen oder einer Kombination der beiden bestehen.

4. Dosiereinrichtung gemäss einem der Ansprüche 1 bis 3, dadurch gekennzeichnet, dass die Dichtungsplatten aus verstärkten Kunststoffen bestehen.

5. Verwendung der Dosiereinrichtung gemäss einem der Ansprüche 1 bis 4, dadurch gekennzeichnet, dass sie zur Dosierung von Feststoffen bei der Herstellung von Gemengen verwendet wird.

6. Verwendung gemäss Anspruch 5, dadurch gekennzeichnet, dass die Dosiereinrichtung zur Dosierung von festen Zusatzmitteln oder Zusatzstoffen beim Spritzen von Mörtel und Beton nach dem Trocken- oder Nassverfahren verwendet wird, wobei die Zusatzmittel insbesonders Abbindebeschleuniger und/oder Silicafume und/oder amorphe Kieselsäure sind.

7. Verwendung gemäss Anspruch 5 oder 6, dadurch gekennzeichnet, dass die Dosiereinrichtung für die Dosierung Granulaten, kornförmigen Feststoffen oder insbesonders von pulverförmigen Feststoffen verwendet wird.

8. Verwendung gemäss einem der Ansprüche 5 bis 7, dadurch gekennzeichnet, dass die Dosiereinrichtung als eigenständiges Gerät oder an eine Fördermaschine angebaut betrieben wird.

9. Verwendung gemäss einem der Ansprüche 5 bis 8, zur Dosierung von Feststoffen, insbesonders pulverförmigen Feststoffen gegen Ueberdruck.

10. Verwendung gemäss Anspruch 9 zur Dosierung von Feststoffen zum unter Druck stehenden Förderstrom von Pump- und insbesonders Spritzbeton im Trockenund/oder Nassspritzverfahren.

11. Verfahren zur Dosierung, insbesonders von Feststoffen, speziell pulverförmigen Feststoffen, dadurch gekennzeichnet, dass die Dosiereinrichtung gemäss einem der Ansprüche 1 bis 4 synchron mit der Fördermaschine mechanisch oder elektrisch gesteuert wird.
